(19) Europäisches Patentamt

European Patent Office

Office européen des brevets

(11) EP 4 765 166 A1

(12) EUROPEAN PATENT APPLICATION

(43) Date of publication:
24.06.2026 Bulletin 2026/26

(21) Application number: 25225379.4

(22) Date of filing: 19.12.2025

(51) International Patent Classification (IPC):
H01B 7/285 (2006.01)    H01B 7/14 (2006.01)

(52) Cooperative Patent Classification (CPC):
H01B 7/282; H01B 7/2825; H01B 7/285;
H01B 7/14; H01B 13/32

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 23.12.2024 NO 20241262

(71) Applicant: Nexans
92400 Courbevoie (FR)

(72) Inventors:
• Akulichev, Anton
N-1769 Halden (NO)
• Eyssautier, Quentin
1734 Hafslundsøy (NO)
• Roen Velo, Ingrid
3520 Jevnaker (NO)
• Sundby, Jan-Are
1710 Sarpsborg (NO)

(74) Representative: Acapo Onsagers AS
Edvard Griegs vei 1
5059 Bergen (NO)

(54) SUBSEA HIGH VOLTAGE POWER CABLE

(57) The present invention relates to the technical field of subsea power cables. More specifically, the invention relates to a method of manufacturing a high voltage power cable comprising a cable core surrounded by an insulation system, wherein the cable core comprises conductor elements and a water blocking composition, wherein the method comprises the steps of stranding the conductor elements to obtain a stranded bundle of conductor elements, introducing the water blocking composition in the voids left in the stranded bundle of conductor elements, degassing of the water blocking composition, obtaining the cable core, and surrounding the insulation system coaxially around the cable core. The present invention further relates to a high voltage power cable produced by the method according to the invention and a use of the high voltage power cable.

Fig. 1

Processed by Luminess, 75001 PARIS (FR)

**Description**

FIELD OF THE INVENTION

The present invention relates to the technical field of high voltage power cables. More specifically, the invention relates to a method for manufacturing a subsea high voltage power cable. Further, the invention relates to a subsea high voltage power cable and to the use of such power cables for large water depths.

BACKGROUND

There is a general need for subsea power cables to deliver electric power subsea. After deployment, subsea power cables for large water depths are exposed to high water pressure. Typically, they are also exposed to mechanical loads imposed during dynamic movements of the cable from wave motions and subsea currents.

Subsea power cables use water barriers to keep dry the cable core comprising a bundle of conductor elements, as e.g. metal wires, stranded to a bundle. If water ingresses into the cable core appear, a process of chemical degradation of the materials starts having a severe impact on electrical properties and finally on the durability of the cable. The protection of the power cable, in particular under high water pressure is still technically a challenge.

Despite performing technical development, there is still the danger that water may enter the cable core over time. Local damage of the power cable may cause water to enter, for example. After having entered, the water can move in longitudinal direction of the cable core in the voids between the conductor elements of the bundle of conductor elements. An approach for preventing the ingress refers to the implementation of a watertight metal sheath surrounding the cable core. The manufacturing is, however, complicated and costly.

As for an alternative, the state of the art suggests filling the voids left between the conductor elements with a polymeric material in order to protect the cable core from water entering it, but if being entered the material protects the cable core from water moving in longitudinal direction along the length of the power cable.

It is also well known that polymeric material is intermittently provided along the longitudinal direction of the power cable. The US 4 397 624 is an early publication on such techniques rendering a cable longitudinal watertight. An apparatus injects a polymeric material from outside a bundle of conductor elements into the voids formed by the conductor elements.

There are very different approaches of how to improve subsea cables from water entering the cable core. The invention's underlaying problem relates to the provision of a method of manufacturing a power cable resulting in a power cable having improved properties such that water ingress into the cable core is avoided or the danger of water ingress is minimized.

Further, the invention's underlaying problem relates to the provision of a power cable showing a minimized risk of water ingress, in particular to the provision of a power cable being devoid of a watertight metal barrier sheath.

Even further, the invention's underlaying problem relates to the provision of a method for manufacturing a subsea power cable in wet design, which method ensures a more reliable processing of the power cables components, thereby reducing the power cables' susceptibility to water ingress resulting in an improved wet design power cable.

The invention's underlaying problem in particular relates to the provision of a power cable which can be used in increased water depths.

SUMMARY OF THE INVENTION

The invention's underlying problems are solved by the subject-matter of claim 1. A first aspect of the invention therefore relates to a method of manufacturing a power cable comprising a cable core surrounded by an insulation system, wherein the cable core comprises conductor elements and a water blocking composition, wherein the method comprises the steps of stranding the conductor elements to obtain a stranded bundle of conductor elements, introducing the water blocking composition in the voids between the conductor elements, degassing of the water blocking composition, obtaining the cable core, and arranging the insulation system coaxially around the cable core.

According to an alternative, the invention's underlaying problem is solved by the subject-matter of claim 2, i.e. by a method of manufacturing a power cable comprising a cable core surrounded by an insulation system, wherein the cable core comprises conductor elements and a water blocking composition, wherein the method comprises the steps of applying the water blocking composition on the outer surface of the conductor elements, stranding the conductor elements with the water blocking composition in order to obtain a stranded bundle of conductor elements, degassing of the water blocking composition, obtaining the cable core, and arranging the insulation system coaxially around the cable core.

There are distinguishing approaches on how to improve the resistivity against water ingress into the cable core of a power cable. Many approaches relate to shielding of the power cable. According to the present invention, however, the method of manufacturing is primarily chosen for providing an improved power cable. An essential step of the method of manufacturing the power cable relates to the degassing of the water blocking composition.

The degassing step has an impact on the manufacturing method of the wet design power cable directly influencing its properties. The improvement of properties is the result of distinguishing mechanisms. It has surprisingly found that the degassing step influences the viscosity and viscoelastic properties of the water blocking composition as well as the thermal expansion properties. After the degassing step, the water blocking composition shows a lower melt flow index proving the increase in the static viscosity. Furthermore, the complex shear modulus increases which shows an improvement in the manufacturing of the power cable because it reduces the squeeze out when abrupt pressure occurs during the manufacturing process.

There are further beneficial effects associated with the degassing step. Without being bound to a theory of how the degassing step results in the improvement of the wet design cable, it is assumed that the water blocking composition becomes relieved from volatile components in particular moisture. Without the degassing step, the water blocking composition may cause a detrimental effect in the course of the manufacturing process of the power cable. When the water blocking composition has been introduced and in a subsequent step, the insulation layer is arranged around the cable core, the cable core is subjected to a heating step since the electrically insulating layer of the insulation system is to be subjected to a vulcanization step performed via heating. During that heating step, a minimal amount of moisture and/or volatile components are released from the water blocking component causing a deformation of cable core which again is the origin of defects. The insulation system surrounds the cable core.

As for a further effect when not degassing the water blocking component, it was surprisingly found that moisture, entrapped air and even more volatile components of the water blocking composition can migrate into the layers of the insulation system causing defects in the course of the use of the power cable in the long term. This may happen during the manufacturing process of the power cable: In the process of manufacturing the power cable, the conductor, i.e. the entirety of the conductor layers, may be fed into a so-called tower line, where the conductor is heated up to a second temperature of e.g. 100°C to 200°C, preferably of about 150°C to about 170°C for the purpose of vulcanizing the electrically insulating layer. Furthermore, a tension force is applied onto the conductor. By the elevated temperature and the tensioning force, the water blocking composition may have the tendency to expand, penetrate into the voids of neighboring conductor layers, leak from the voids of an outermost layer to a perimeter of the outermost layer, or to release moisture and/or volatile components causing defects in the subsequently arranged layers of the power cable. Without being bound to a certain theory, these are the mechanisms how the method of manufacturing the power cable enables solving the invention's underlying problem. The step of degassing, the properties of the polymer base in the water blocking composition and the characteristics of the water blocking composition are important features for achieving the invention's underlying problems.

The method according to the invention makes use of a stranding step. The stranding step involves twisting together the conductor elements to form one or a plurality of conductor layers. The conductor elements may be fed from spools or bobbins into a stranding apparatus. The feeding may involve guiding the individual conductor elements through pathways to provide a desired alignment and tension. The stranding apparatus then twists the conductor elements together, e.g. in a helical pattern around a central axis. When the conductor elements are twisted, they form concentric layers. The stranding apparatus may comprise a rotating head, through which the conductor elements are fed. This head may also be referred to as a stranding die or a conductor forming die. The stranding die may be nano diamond-coated to reduce die wear that would increase the conductor layer diameter. The individual conductor elements are brought together just after passing the stranding die in a linear flow process.

The arrangement of the insulation system is typically performed by firstly providing the inner semiconductive layer around the cable core, optionally around layers on top of the cable core, thereafter the insulating layer is arranged around the inner semiconductive layer, wherein the insulating layer is preferably a cross-linked polyethylene like XLPE, and thereafter the outer semiconductive layer is arranged around the insulating layer.

It is emphasized that the order of method steps can arbitrarily be chosen as long as technically meaningful. Of course, the arrangement of the insulation system cannot be performed before obtaining the cable core. However, the provision of the water blocking composition could be performed before stranding the conductor elements. In doing so, the alternative according to claim to results in obtaining a power cable when performing the provision of the water blocking composition before having stranded the conductor elements.

According to the present invention, the term "conductor element" means the metal part wherein a plurality of these parts is used for stranding such that the conductor is obtained. In the simplest way, the conductor element can be a metal wire and/or a profile conductor. It is preferred that the conductor element is made of aluminium, copper, an alloy of aluminium or an alloy of copper.

According to the first aspect of the present invention, the water blocking composition is either introduced in the voids between the conductor elements or applied on the outer surface of the conductor elements. The step of introducing in the voids between the conductor elements means that the water blocking composition is provided into the voids after stranding the conductor elements. The step of applying the water blocking composition on the outer surface of the conductor element is understood as depositing on the metal surface of the conductor element. The plurality of conductor elements can then be stranded to obtain the stranded bundle of conductor elements.

In one aspect, the power cable comprises the cable core and an insulating system radially surrounding the cable core, where the insulating system comprises an inner semiconductive layer, insulation layer and outer semiconductive layer, wherein the insulation system is not surrounded by a watertight metal barrier sheath. Thus, according to this aspect, the power cable is devoid of a watertight metal barrier sheath. It refers to an invention's underlying problem to improve the wet design power cable. A wet design power cable can be made and operated without watertight metal barrier sheaths.

The method step of stranding the conductor elements is well known in the power cable technology. After having stranded a plurality of conductor elements it may be unavoidable to leave voids between distinguishing conductor elements. These voids, or alternatively designated as interstices, are filled with the water blocking composition.

The method steps of the invention do not represent exclusive steps. In other words, further steps can be included. As for an example, the step of obtaining the cable core is a separate step, wherein before having performed this step, a further method step can be performed, such as wrapping a tape around the cable core. This method step improves the allocation of the water blocking composition in the voids and supports forcing the water blocking composition in the voids of the cable core. The term "cable core" in the framework of this invention means the stranded bundle of conductor elements, wherein the voids are filled with the water blocking composition. Optionally, the cable core may additionally comprise the tape (see below).

In one aspect, the stranded bundle of conductor elements may form a hollow profile wire, a keystone profile wire, or a round stranded wire. A hollow profile wire, also designated as hollow conductor, comprises a metal profile that has a precisely shaped outer geometry and a hollow channel running inside it. A keystone profile wire is a cold-drawn metal wire who's cross-section is shaped like a keystone, i.e. a trapezoid that is wider on one side and narrower on the other. A round stranded wire is an electrical conductor made by twisting together many small round wires into a single, larger round bundle. The technical effect associated with the essential step of degassing develops to its highest extent, when the stranded bundle of conductor elements forms a round stranded wire. Therefore, the wet design power cable preferably comprises a round stranded wire. The method step of degassing can be performed by any means which releases moisture, entrapped air and/or volatile components. It is preferred to apply heat at reduced pressure, especially vacuum. The application of heat is a more preferred way of performing degassing. Therefore, in one aspect, the step of degassing of the water blocking composition is performed by heating in a dry atmosphere, preferably by heating to a temperature of 70°C to 250°C, more preferred more than 100°C to 220°C, even more preferred 120°C to 160°C in a dry atmosphere; and/or wherein the degassing is performed by heating in a dry inert gas atmosphere, preferably by heating to a temperature of 70°C to 250°C, more preferred more than 100°C to 220°C, even more preferred 120°C to 160°C in a dry inert gas atmosphere.

In one aspect, the step of degassing of the water blocking composition is performed by heating, preferably by heating to a temperature of 70°C to 250°C, more preferred more than 100°C to 220°C, even more preferred 120°C to 160°C; and by applying a vacuum. According to a particular preferred embodiment, the step of degassing of the water blocking composition is performed heating, preferably by heating to a temperature of 70°C to 250°C, more preferred more than 100°C to 220°C, even more preferred 120°C to 160°C; and by applying a vacuum followed by flushing with a dry inert gas after the step of applying the vacuum. The step of applying vacuum followed by flushing can be repeated.

The heating is performed such that the water blocking composition is heated. In practice, this may be performed by heating the stranded bundle of conductor elements, preferably by induction heating.

When applying vacuum, the pressure exerted to the water blocking composition amounts to more than 0 mbar and less than 1 mbar, preferably less than 0.25 mbar, more preferred less than 0.1 mbar, most preferred 0.01 mbar during the step of applying the vacuum.

In order to improve the degassing, the method step of degassing can be performed while having circulation of the water blocking compound in a fluid or semi-fluid form. According to this aspect, the method step of degassing can be performed while kneading the water blocking compound.

As for an alternative, the step of degassing could be performed by reducing pressure, or the step of degassing could be performed by heating in the above-mentioned ranges together with reducing pressure.

In one aspect, the step of degassing has a duration of 1 h to 14 days, preferably 2 h to 7 days, more preferred 4 h to 48 h, most preferred 8 h to 24 h. The duration of 4 h to 24 h can preferably be performed if further measures are applied which accelerate the degassing, i.e. the application of reduced pressure and/or the method step of kneading. According to a further aspect, the step of degassing has a duration of 0.5 h to 7 days, preferably 1 h to 2 days, more preferred 2 h to 48 h, most preferred 3 h to 12 h.

It was surprisingly found that the step of degassing requires some considerable time. The best balance between the release performance and an economic realization of the method of manufacturing the power cable is achieved in the above degassing durations.

In one aspect, the water blocking composition comprises a polymeric material, preferably wherein the water blocking composition comprises a polyolefin, more preferred wherein the water blocking composition comprises polyisobutylene.

A possible approach of improving the watertightness refers to the choice of the water blocking composition. It was found that polyisobutylene is a favored thermoplastic polymer in terms of its performance as water blocking compound.

The kind of the water blocking composition and also the kind of thermoplastic polymer used in the water blocking composition has an influence on the kind of volatile components and on the amount of moisture in the water blocking composition. There is thus a relation between the kind of water blocking composition and the method step of degassing.

In a preferred aspect, the polyisobutylene is a medium molecular weight polyisobutylene, preferably wherein the polyisobutylene has a viscosity average molecular weight of 5,000 g/mol up to 800,000 g/mol, preferably 10,000 g/mol to 700,000 g/mol, more preferred 50,000 g/mol to 600,000 g/mol, even more preferred 150,000 g/mol to 500,000 g/mol, most preferred 250,000 g/mol to 400,000 g/mol.

In the state of the art, low molecular weight polyisobutylene is used. However, it was surprisingly found that the medium molecular weight polyisobutylene exhibits the best performance as water blocking component in the water blocking composition.

The feature "viscosity average molecular weight" is well known for a skilled person in polymer science. The term "viscosity average molecular weight" (often denoted as $M_v$) is used in polymer chemistry to describe the average molecular weight of a polymer based on its viscosity in solution. This measure lies between the number average molecular weight $M_n$ and the weight average molecular weight $M_w$ and is particularly useful for characterizing polymers. As for its measurement, the viscosity average molecular weight is determined by measuring the viscosity of a polymer solution, in the case of polyisobutylene e.g. in toluene. This involves dissolving the polymer in a solvent and measuring how the solution's viscosity changes with concentration. With the Mark-Houwink Equation: The relationship between the intrinsic viscosity ($[\eta]$) and the molecular weight is given by the Mark-Houwink equation:

$$[\eta] = K \cdot \overline{M_v^a},$$

where $K$ and $a$ are constants that depend on the polymer-solvent system. The calculation is performed as follows: The viscosity average molecular weight is calculated using the equation:

$$\left( \frac{\sum M_i^{1+a} N_i}{\sum M_i N_i} \right)^{\frac{1}{a}},$$

Where $M_i$ is the molecular weight of the $i$-th polymer molecule, and $N_i$ is the number of such molecules.

The viscosity average molecular weight is important because it provides insights into the polymer's properties, such as its mechanical strength and solubility, which are crucial for power cable applications and the method of manufacturing the power cables.

The viscosity average molecular weight in the above-mentioned ranges provide best results in view of the invention's underlaying problems.

One further aspect refers to the water blocking composition as a whole. In one aspect, the water blocking composition comprises

- 20-95 wt.-% polymer base comprising a polymer selected from polyisoprene, butyl rubber, polyisobutylene, neoprene, ethylene propylene rubber, ethylene propylene diene monomer rubber, ethylene-octene, styrene ethylene butadiene styrene, polyurethanes and silicone rubber;

- optional 0-40 wt.-% inert component;

- 5-50 wt.-% conductive filler.

As for the polymer base, polyisobutylene is most preferred as disclosed above. The present invention provides a specifically manufactured polymer based water blocking composition with special rheological properties and chemical composition.

The water blocking composition may contain inert components to increase the viscosity of the filling compound at temperatures relevant for manufacturing process (i.e. vulcanization at a temperature of 150°C).

The term "inert component" as used herein refers to a compound not providing conductivity and where the core of the inert component does not undergo a chemical reaction with the other elements of the conductor filling compound or the conductor strands.

The inert component may be selected from one or more of calcium carbonate, talk, titanium dioxide, silicon dioxide, magnesium dioxide, borosilicate and other types of glass in the form of glass beads or fibers, including hollow glass beads. It will also be possible to include a combination of two or mor of these compounds in the water blocking composition.

In one aspect of the power cable, the complex viscosity of the water blocking composition at 150 °C is between 10 and 300 kPa·s.

"Complex viscosity" as used herein refers to viscosity measured by an oscillating rheometer operating with a 25 mm parallel plate (25PP) probe at 1 Hz frequency and 0.1 % strain amplitude. It is acknowledged that that the complex viscosity refers to the water blocking composition as a whole.

In a further aspect of the power cable, the conductive filler is selected from one or more of the following: carbon black, graphite, carbon fibers, potassium titanate fibers, carbon nano-tubes, graphene or metallic powder like aluminum, copper or silver. It will also be possible to include a combination of two or more of these compounds in the water blocking composition.

In another aspect of the power cable the conductive filler has a particle size distribution of: 5 nm to 100 $\mu$m. A person skilled in the art will appreciate that this is to be understood that at least 95 wt.-% of the particles have an average size within the defined range, preferably 98 wt.-%.

In yet another aspect of the power cable, the polymer base comprises one or more additional polymers selected from polyisoprene, polybutadiene, butyl rubber, neoprene, polyurethanes, ethylene propylene rubber, ethylene propylene diene monomer rubber, ethylene-octene, styrene ethylene butadiene styrene and silicone rubber. It is preferred that these are used besides polyisobutylene.

In one aspect of the power cable the content of volatile chemicals in the water blocking composition is < 1.5 wt.-%, when measured via TGA. When the TGA is performed with isothermal step at 200 °C for 1 h, sample mass is 60 $\pm$ 10 mg.

In a further aspect of the power cable, the volume expansion of the water blocking composition is less than 10%, preferably less than 5 %, more preferably less than 4%, when measured at 150 °C compared to room temperature at atmospheric pressure.

In yet another aspect of the power cable, the water blocking composition further comprises a contracting filler, wherein the contracting filler contracts upon heating. In embodiments of this aspect, the contracting filler can be any suitable material having a negative thermal expansion coefficient (CTE) of $-1 \times 10^{-6}$ °C$^{-1}$ and lower. In one aspect, the CTE is between -10 x 10$^{-6}$ 1/K to +700 x 10$^{-6}$ 1/K, preferably -1 x 10$^{-6}$ 1/K to +100 x 10$^{-6}$ 1/K, more preferred -0.9 x 10$^{-6}$ 1/K to +10 x 10$^{-6}$ 1/K. In case of the higher value, the water blocking composition is devoid of any negative CTE component; instead, the value is obtained just by subjecting the degassing step to polyisobutylene compound of the water blocking composition which enables reaching a lower value of the CTE compared to the polyisobutylene compound not being subjected to the degassing step. The more negative thermal expansion coefficient material is added the more the CTE approaches to lower values. Examples of such negative thermal expansion coefficient materials are metal tungstates, metal phosphates, metal molybdates, metal vanadates, metal arsenates, metal oxides (glass ceramics), and metal nitrides, as disclosed in U.S. Pat. Nos. 5,322,559, 5,433,720, 5,514,360, 5,919,720, 6,521,556, and 7,632,480. A similar effect can also be achieved by adding other compounds as well as substances undergoing phase transformations over a certain temperature range of 30-90°C.

The preferred fillers are bismuth nickelates (general chemical formula Bi$_{1-x}$M$_x$NiO$_3$, where M represents a metal and x is a numerical value from 0 to 0.2), zirconium tungstate (chemical formula ZrW$_2$O$_8$), hafnium tungstate (HfW$_2$O$_8$), Zr$_2$P$_2$WO$_{12}$, Hf$_2$P$_2$WO$_{12}$, and magnetic nanocrystalline materials, such as CuO-nanocrystals, conductive nano-fibers such as carbon nano-tubes, metal alloys like Invar Fe$_3$Pt, or MnCoGe- or MnCoGeN-based alloys.

In one aspect of the power cable, the contracting filler is present at 0.1-30 wt.-% in the water blocking composition.

In one aspect, the step of stranding the conductor elements to obtain a stranded bundle of conductor elements may be performed such that the conductor elements are arranged in at least one concentric conductor element layer around a central longitudinal axis. In a preferred aspect, the central longitudinal axis is preferably provided with one central conductor element. The meaning of the concentric conductor element layer, or also designated as conductor layer, becomes visible from the Figure.

The method according to the invention may include the formation of several conductor layers, such as 2, 3, 4, 5, 6 or even more conductor layers. The individual conductor layers are created by individual stranding dies, which are to be passed through one after the other, wherein each of the stranding die is designed to produce the respective conductor layer.

According to a preferred aspect, the stranded bundle of conductor elements comprises a first concentric conductor element layer as an inner concentric conductor element layer and the step of introducing the water blocking composition is performed by introducing the water blocking composition between the central longitudinal axis and the inner concentric conductor element layer. The inner concentric conductor element layer surrounds in a preferred embodiment the one central conductor element.

The introduction of the water blocking composition inside the power cable is performed such that the water blocking composition is provided in the method step of stranding the conductor elements. In the state of the art, the provision of the water blocking composition is performed in that the stranded bundle of conductor elements is passed through a tight chamber wherein the composition is pressed through a nozzle onto the surface of the stranded bundle of conductor elements and the water blocking composition migrates into the inner parts of the stranded bundle of conductor elements while the stranded bundle of conductor elements passes through the tight chamber. By introducing the water blocking composition in the inner part of the stranded bundle of conductor elements, a more homogeneous distribution of the water blocking composition is achieved.

In a preferred aspect, the stranded bundle of conductor elements comprises at least three concentric conductor element layers comprising an inner concentric conductor element layer and an outer concentric conductor element layer and the step of introducing the water blocking composition is performed by introducing the water blocking composition between the central longitudinal axis and the inner concentric conductor element layer as well as between the outer concentric conductor element layer and its adjacent concentric conductor element layer, wherein the water blocking composition is not introduced between at least one pair of adjacent conductor element layers.

According to this preferred embodiment, voids between two adjacent conductor layers are left out with the filling of the water blocking composition. In doing so, a more homogeneous distribution of the water blocking composition is achieved.

In one aspect, the power cable further comprises a tape and the method further comprises the step of wrapping the tape around the stranded bundle of conductor elements.

The tape is wrapped around the stranded bundle of conductor elements in which stranded bundle the water blocking composition is introduced. The tape forces the water blocking composition to keep being in position, i.e. within the stranded bundle of conductor elements.

In one aspect, the power cable further comprises an inner semiconductive layer, an electrically insulating layer and an outer semiconductive layer and the method further comprises the steps of arranging the inner semiconductive layer, the electrically insulating layer and the outer semiconductive layer outside the stranded bundle of conductor elements.

According to this preferred method, the cable core is provided with the insulation system. The power cable can further be provided with an armoring and an outer sheath.

In one aspect, the step of degassing is performed prior to the step of introducing the water blocking composition.

In one aspect according to the alternative, the step of degassing is performed prior to the step of applying the water blocking composition.

When performing the degassing, moisture and volatile components are released from the water blocking composition. The order of the degassing step can in principle be chosen at any time of manufacturing the cable core or thereafter. However, it is a preferred aspect to perform this step beforehand as it streamlines the method of manufacturing the power cable. Further, when degassing before introduction or application, the release performance is improved, i.e. more volatile substances are removed from the water blocking composition. This means that this method step of degassing prior to its introduction or application may leave a 'fingerprint' to the power cable.

In one aspect, the temperature of the water blocking composition during the step of introducing the water blocking composition or the step of applying the water blocking composition is below the temperature at which the step of degassing is performed and/or above 20°C, preferably above 40°C, more preferred 60°C. According to the first aspect of the present invention, the water blocking composition is either introduced in the voids between the conductor elements or applied on the outer surface of the conductor elements.

The invention's underlying problems are solved by the subject-matter of claim 10. A second aspect of the invention therefore relates to a power cable comprising a cable core surrounded by an insulation system, wherein the cable core comprises conductor elements and a water blocking composition.

In one aspect, the power cable can be manufactured by the method according to the invention.

In one aspect, the water blocking composition comprises a polymeric material, preferably wherein the water blocking composition comprises a polyolefin, more preferred wherein the water blocking composition comprises polyisobutylene.

In one aspect, the polyisobutylene is a medium molecular weight polyisobutylene, preferably wherein the polyisobutylene has a viscosity average molecular weight of 5,000 g/mol up to 800,000 g/mol, preferably 10,000 g/mol to 700,000 g/mol, more preferred 50,000 g/mol to 600,000 g/mol, even more preferred 150,000 g/mol to 500,000 g/mol, most preferred 250,000 g/mol to 400,000 g/mol.

The polyisobutylene represents the most preferred thermoplastic component in the water blocking composition. As for the characteristics as well as the properties and benefits, reference is made to the above description in view of the method of the invention.

In view of the details regarding the water blocking composition, reference is made to the above description in view of the method of the invention.

In one aspect, the power cable comprises between one and three cable cores. The power cable with one cable core preferably represents a high voltage direct current (HVDC) power cable. The power cable with three cable cores preferably represents a high voltage alternating current (HVAC) power cable.

The power cable according to the invention is preferably a high voltage cable.

The term "high voltage" in the framework of the present application means voltages of 36 kV or more (IEC terms > 36 kV). In a further aspect of the power cable, the cable is designed for voltages of 100 kV or higher, 320 kV or higher, or 525 kV or higher. Such cables benefit the most from the present application. With increasing voltage or energy transmitted, the power cable requires increased cable core diameters. This renders the step of degassing and the most appropriate choice of the water blocking composition extremely important.

The invention's underlying problems are solved by the subject-matter of claim 13. A third aspect of the invention therefore relates to a use of a power cable (10) according to one of claims 14 to 16 in a subsea environment under a pressure of more than 0 MPa to 60 MPa, preferably 0.2 MPa to 40 MPa, more preferred 0.5 MPa to 30 MPa, even more preferred 1 MPa to 29 MPa, most preferred 10 MPa to 25 MPa.

The method of manufacturing the power cable according to the present invention enables the provision of an improved power cable which withstands higher pressures in large subsea water depths. The power cable can be used under a pressure of up to 600 bar, preferably 400 bar, more preferred 300 bar.

Features being solely disclosed in connection with the method of the invention are deemed to be disclosed in connection with the device, i.e. the power cable, or the use of the invention and vice versa.

BRIEF DESCRIPTION OF THE DRAWINGS

Certain aspects of the presently disclosed subject-matter will be described with reference to the accompanying drawings, which are representative and schematic in nature and are not considered to be limiting in any respect as it relates to the scope of the subject-matter disclosed herein:

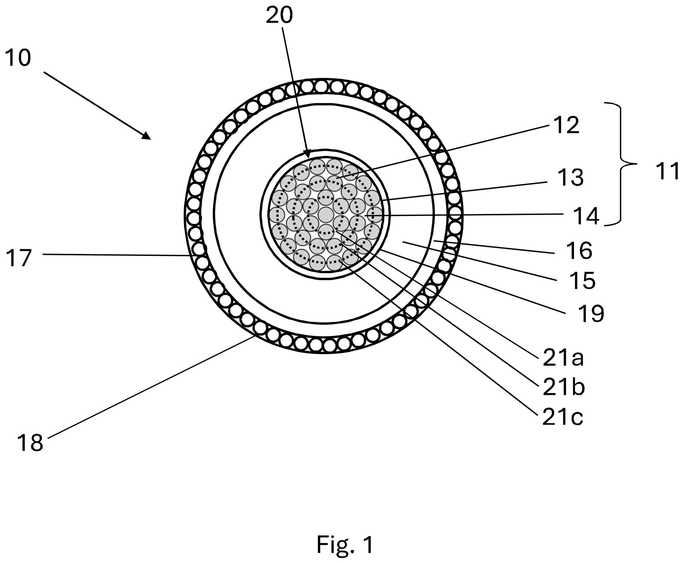

Figure 1 depicts a power cable.

DESCRIPTION OF EMBODIMENTS

Fig. 1 depicts a power cable 10 comprising a cable core 11 comprising conductor elements 12, wherein the plurality of conductor elements 12 form the conductor. The conductor elements 12 are stranded to form a stranded bundle of conductor elements. The space left over between the conductor elements 12 represents voids 14 which are filled with the water blocking composition.

The conductor elements 12 are arranged in conductor element layers 21a,b,c around a central conductor element 12 wherein the central longitudinal axis of the power cable 10 is in the center of this central conductor element. Fig. 1 shows the first conductor element layer 21a, the second conductor element layer 21b, and the third conductor element layer 21c. The power cable 10 may comprise even more layers.

According to a preferred embodiment of the present invention, the water blocking composition may be introduced in the voids between the central conductor element and the first conductor element layer 21a. According to a further preferred embodiment of the present invention, the water blocking composition may be introduced in the voids 14 between the central conductor element and the first conductor element layer 21a as well as the voids 14 between the second conductor element layer 21b and the third conductor element layer 21c. The voids 14 between other conductor element layers are left out in view of the step of introducing the water blocking composition. These voids are, however, filled with the water blocking composition filled in the voids between the other conductor element layer.

A tape 13 is wrapped around the stranded bundle of conductor elements 12 filled with the water blocking composition. In practice, the tape is lapping, i.e. while winding around the stranded bundle of conductor elements 12, the tape 13 overlaps with the same tape 13 of the previous turn of the tape 13. Further, in practice, the tape may be wrapped in more than one layer over one another.

In the exemplary embodiment of Fig. 1, the inner semiconductive layer 19 is arranged around tape 13. The inner semiconductive layer 19 comprises a polymer layer, typically a polyethylene-based material, comprising carbon black rendering the inner semiconductive layer 19 to be semiconductive.

On the inner semiconductive layer 19, there is provided the electrically insulating layer 15. Typically, the layer is a polyethylene-based polymer or polymer blend subjected to a step of curing which renders the electrically insulating layer 15 a thermoset material.

The next layer is the outer semiconductive layer on top of the electrically insulating layer 15. It may be made of the same material as the inner semiconductive layer 19.

The power cable 10 according to the exemplary embodiment of Fig. 1 further comprises an armoring 17, and an outer sheath 18.

It is emphasized that Fig. 1 exhibits only an exemplary embodiment showing some of the features of the invention. Of course, a power cable in line with the invention can also comprise three cable cores 11. A power cable comprising three cable cores 11 is typically used as high voltage alternating current (HVAC) power cable. In this exemplary power cable 10 of Figure 1, only one cable core 10 is shown. Such power cables are typically used as high voltage direct current (HVDC) power cables.

A power cable of the invention can also have further layers between the cable core and the further layers shown in Fig. 1. In other words, Fig. 1 is by no means understood to limit the scope of the claimed invention.

EXAMPLES

In order to show the benefits associated with the degassing of the water blocking composition, the viscosity of the untreated water blocking feedstock material is compared to the viscosity of a feedstock material subjected to a degassing step in line with the present invention.

The polyisobutylene-based water blocking compound is subjected to a degassing treatment involving a heating cycle at 140°C for 4 hours. Thereafter, the viscosity and the coefficient of thermal expansion have been measured.

The viscosity has been measured by two distinguishing methods, i.e. in terms of the melt flow index (MFI) test as per the actual ISO 1133 method and in terms of the complex shear modulus. The complex shear modulus is - as well known by a skilled person - a parameter that gives information about the viscoelastic behaviour when applying an oscillating shear load. In the present case, the complex shear modulus is measured in the unit Pa with the sample provided in 25 mm parallel-plate geometry at 140°C, with 1 Hz, 0.1 % strain amplitude.

The coefficient of thermal expansion (CTE) measured by thermomechanical analysis (TMA) quantifies how a material's spatial dimensions change with temperature. The quantity can be expressed as length relation per temperature unit ($\mu$m/m$_*$K or $10^{-6}$ 1/K) or also in parts per million per degrees Centigrade. In the measurement, the TMA instrument applies controlled forces and monitors dimensional changes as a sample heats or cools, plotting $\Delta V/\Delta T$ (change in volumn/change in temperature) to calculate CTE, especially in the linear region of the curve. The CTE was measured with the feedstock material without the use of a negative thermal coefficient filler. A water blocking composition for use may comprise a filler having properties of additionally reducing the thermal expansion coefficient.

The results are shown in the following Table 1:

Tab. 1: The melt flow index (MFI) and the coefficient of thermal expansion (CTE) of the untreated material and of the material exposed to the degassing step are measured at the same measurement conditions; 2.16 kg of the material are treated under said conditions; the MFI value is the average of 3+ results

| Material condition | MFI | CTE [$\mu$m/m$_*$K] | Complex shear modulus [Pa] |
|---|---|---|---|
| Untreated material | 82,4 | 781 | 127523 |
| Exposed to 140°C for 4h in air | 68,2 | 522 | 154893 |

As can be seen from Table 1, the polyisobutylene feedstock material shows a significantly decreased melt flow index, i.e. the viscosity increases. Furthermore, the complex shear modulus significantly increases after the degassing step. This proves the ameliorated processibility of the feedstock material since the higher viscosity avoids a dropping off. The higher complex shear modulus shows an improved protection against squeezing out of the water blocking composition during manufacturing of the cable.

The reduction of the CTE by the step of degassing is shown in view of the polyisobutylene feedstock material. The reduction of the CTE improves the properties of the water blocking composition which can further be assisted by the use of a filler imparting a negative thermal expansion coefficient.

REFERENCE LIST

| | |
|---|---|
| 10 | power cable |
| 11 | cable core |
| 12 | conductor element |
| 13 | tape |
| 14 | voids |
| 15 | electrically insulating layer |
| 16 | outer semiconductive layer |
| 17 | armoring |
| 18 | outer sheath |
| 19 | inner semiconductive layer |
| 20 | conductor |
| 21a,b,c | first, second and third conductor element layer |

**Claims**

1. Method of manufacturing a power cable (10) comprising a cable core (11) surrounded by an insulation system, wherein the cable core (11) comprises conductor elements (12) and a water blocking composition, wherein the method comprises the steps of

   • stranding the conductor elements (12) to obtain a stranded bundle of conductor elements (12);
   • introducing the water blocking composition in the voids (14) between the conductor elements (12);
   • degassing of the water blocking composition;
   • obtaining the cable core (11); and
   • arranging the insulation system coaxially around the cable core (11).

2. Method of manufacturing a power cable (10) comprising a cable core (11) surrounded by an insulation system, wherein the cable core (11) comprises conductor elements (12) and a water blocking composition, wherein the method comprises the steps of

   • applying the water blocking composition on the outer surface of the conductor elements (12);
   • stranding the conductor elements (12) with the water blocking composition in order to obtain a stranded bundle of conductor elements (12);
   • degassing of the water blocking composition;
   • obtaining the cable core (11); and
   • arranging the insulation system coaxially around the cable core (11).

3. Method according to claim 1 or claim 2, wherein the step of degassing of the water blocking composition is performed by heating in a dry atmosphere, preferably by heating to a temperature of 70°C to 250°C, more preferred more than 100°C to 220°C, even more preferred 120°C to 160°C in a dry atmosphere; and/or wherein the degassing is performed by heating in a dry inert gas atmosphere, preferably by heating to a temperature of 70°C to 250°C, more preferred more than 100°C to 220°C, even more preferred 120°C to 160°C in a dry inert gas atmosphere; and/or wherein the step of degassing of the water blocking composition is performed by applying a vacuum; and/or wherein the step of degassing of the water blocking composition is performed flushing with a dry inert gas after the step of applying the vacuum, preferably followed by repeatedly applying the vacuum.

4. Method according to any one of claims 1 to 3, wherein the step of degassing has a duration of 0.5 h to 7 days, preferably 1 h to 2 days, more preferred 2 h to 48 h, most preferred 3 h to 12 h.

5. Method according to any one of claims 1 to 4, wherein the water blocking composition comprises a polymeric material, preferably wherein the water blocking composition comprises a polyolefin, more preferred wherein the water blocking composition comprises polyisobutylene.

6. Method according to any one of claims 1 and 3 to 5, wherein the step of stranding the conductor elements (12) to obtain a stranded bundle of conductor elements is performed such that the conductor elements (12) are arranged in at least one concentric conductor element layer (21) around a central longitudinal axis.

7. Method according to claim 6, wherein the stranded bundle of conductor elements (12) comprises a first concentric conductor element layer as an inner concentric conductor element layer (21a) and the step of introducing the water blocking composition is performed by introducing the water blocking composition between the central longitudinal axis and the inner concentric conductor element layer (21a).

8. Method according to claim 6 or claim 7, wherein the stranded bundle of conductor elements comprises at least three concentric conductor element layers (21a,b,c) comprising an inner concentric conductor element layer (21a) and an outer concentric conductor element layer and the step of introducing the water blocking composition is performed by introducing the water blocking composition between the central longitudinal axis and the inner concentric conductor element layer (21a) as well as between the outer concentric conductor element layer and its adjacent concentric conductor element layer, wherein the water blocking composition is not introduced between at least one pair of adjacent conductor element layers.

9. Method according to any one of claims 1 to 8, wherein the step of degassing is performed prior to the step of introducing the water blocking composition; or wherein the step of degassing is performed prior to the step of applying the water blocking composition.

10. Method according to any one of claims 1 to 9, wherein temperature of the water blocking composition during the step of introducing the water blocking composition or the step of applying the water blocking composition is below the temperature at which the step of degassing is performed and/or above 20°C, preferably above 40°C, more preferred 60°C.

11. Power cable (10) comprising a cable core surrounded by an insulation system, wherein the cable core comprises conductor elements (12) and a water blocking composition, **characterized in that** the power cable (10) is manufactured by any one of claims 1 to 10.

12. Power cable (10) according to claim 11, wherein the water blocking composition comprises a polymeric material, preferably wherein the water blocking composition comprises a polyolefin, more preferred wherein the water blocking composition comprises polyisobutylene.

13. Power cable (10) according to claim 12, wherein the polyisobutylene is a medium molecular weight polyisobutylene, preferably wherein the polyisobutylene has a viscosity average molecular weight of 5,000 g/mol up to 800,000 g/mol, preferably 10,000 g/mol to 700,000 g/mol, more preferred 50,000 g/mol to 600,000 g/mol, even more preferred 150,000 g/mol to 500,000 g/mol, most preferred 250,000 g/mol to 400,000 g/mol.

14. Use of a power cable (10) according to one of claims 11 to 13 in a subsea environment under a pressure of more than 0 MPa to 60 MPa, preferably 0.2 MPa to 40 MPa, more preferred 0.5 MPa to 30 MPa, even more preferred 1 MPa to 29 MPa, most preferred 10 MPa to 25 MPa.

20

10

12

13

14

11

17

16

15

19

21a

21b

21c

18

Fig. 1

Europäisches Patentamt

European Patent Office

Office européen des brevets

## EUROPEAN SEARCH REPORT

**Application Number**

EP 25 22 5379

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 800 511 A (TIANJIN DEVELOPMENT ZONE BRANCH OF HUADIAN POWER INTERNATIONAL CORPORA) 18 October 2024 (2024-10-18) | 1-13 | INV. H01B7/285 H01B7/14 |
| A | * figure 4 * <br> * paragraphs [0037] - [0044] * <br> * paragraph [0032]; figures 1,2 * <br> * the whole document * <br> ----- | 14 | |
| A | US 3 836 695 A (STRECKER L ET AL) 17 September 1974 (1974-09-17) * claims 1,3 * ----- | 1-14 | |
| A | US 6 331 353 B1 (FOULGER STEPHEN H [US]) 18 December 2001 (2001-12-18) * examples 1-4 * ----- | 1-14 | |

| TECHNICAL FIELDS SEARCHED (IPC) |
|---|
| H01B |

The present search report has been drawn up for all claims

| Place of search | Date of completion of the search | Examiner |
|---|---|---|
| The Hague | 20 April 2026 | Yildirim, Zeynep |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 5379

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2026

| Patent document cited in search report | | Publication date | Patent family member(s) | | Publication date |
|---|---|---|---|---|---|
| CN 118800511 | A | 18-10-2024 | NONE | | |
| US 3836695 | A | 17-09-1974 | NONE | | |
| US 6331353 | B1 | 18-12-2001 | AR | 025287 A1 | 20-11-2002 |
| | | | AT | E427551 T1 | 15-04-2009 |
| | | | AU | 6759200 A | 13-03-2001 |
| | | | EP | 1218176 A1 | 03-07-2002 |
| | | | ES | 2324514 T3 | 10-08-2009 |
| | | | US | 6331353 B1 | 18-12-2001 |
| | | | WO | 0112432 A1 | 22-02-2001 |

EPO FORM P0459

For more details about this annex : see Official Journal of the European Patent Office, No. 12/82

**EP 4 765 166 A1**

**Patent documents cited in the description**

- US 4397624 A
- US 5322559 A
- US 5433720 A
- US 5514360 A
- US 5919720 A
- US 6521556 B
- US 7632480 B